# EUROPÄISCHE PATENTSCHRIFT

(11) **EP 1 564 448 B1**
(45) Veröffentlichungstag und Bekanntmachung des Hinweises auf die Patenterteilung: **13.12.2006**
(21) Anmeldenummer: 05001868.8
(22) Anmeldetag: 29.01.2005
(51) Int. Cl.: F16H 61/28, F16H 63/38

(54) **Verfahren zum Ermitteln einer Betätigungsstellung bei einem Getriebebetätigungssystem**
Method of determining the actuating position of a gear shift system of a transmission
Méthode de détermination de la position d'un système d'actionnement d'une transmission

(30) Priorität: 13.02.2004 DE 102004007082
(43) Veröffentlichungstag der Anmeldung: 17.08.2005
(73) Patentinhaber: ZF FRIEDRICHSHAFEN AG, 88046 Friedrichshafen (DE)
(72) Erfinder: Veth, Frank, 97723 Obertulba (DE); Mäder, Fred, 97508 Grettstadt (DE)

(56) Entgegenhaltungen:
- EP-A- 1 104 859
- EP-A- 1 300 614
- FR-A- 2 814 250
- US-A- 4 621 328
- US-A- 4 766 774
- US-A1- 2002 088 681

## Beschreibung

Die vorliegende Erfindung betrifft Verfahren zum Ermitteln einer Betätigungsstellung bei einem Getriebebetätigungssystem, gemäß der Oberbegriffen der Ansprüche 1 und 13, wie sie aus der US-A-2002088681 bekannt geworden sind.

Bei automatisiert bzw. automatisch arbeitenden Getrieben in Kraftfahrzeugen ist im Allgemeinen eine Aktuatoranordnung vorgesehen, deren Aktivierung dazu führt, dass im Getriebe Gänge eingelegt bzw. ausgelegt werden. Bei automatisierten Schaltgetrieben bewirken die Aktuatoren im allgemeinen, dass entweder eine Gassenwahlbewegung stattfindet, durch welche eine von mehreren Schaltgassen ausgewählt wird, wobei bei jeder Schaltgasse zumindest ein in einem Gangwahlmodus auszuwählender Gang vorgesehen ist. Bei automatischen Getrieben hat die Betätigung der Aktuatoranordnung im allgemeinen zur Folge, dass einer der Wählbereiche, also beispielsweise P, R, N, D, ausgewählt wird und dementsprechend das Automatikgetriebe dann im gewählten Modus arbeitet. Bei derartigen Betätigungssystemen für Getriebe ist im Allgemeinen dann ein Stellelement vorgesehen, das unter Einwirkung der Aktuatoranordnung bewegt wird, um die verschiedenen Bewegungsmodi durchzuführen. Dieses Stellelement ist dann beispielsweise in Zuordnung zu einer jeweiligen Schaltgasse oder in einer Schaltgasse vorgesehenen Gangstufen in bestimmten Betätigungsstellungen positionierbar, wobei jede dieser Betätigungsstellungen mit einem vorgegebenen Zustand des Getriebes übereinstimmt. So kann bei Auswahl einer Schaltgasse die Neutralstellung, also die zwischen zwei auswählbaren Gangstufen liegende Stellung, eine derartige vorbestimmte Betätigungsstellung sein, selbstverständlich kann auch eine derartige Stellung eine Betätigungsstellung sein, in welcher dann ein jeweiliger Gang eingelegt ist. Bei den angesprochenen Automatikgetrieben kann in Zuordnung zu den verschiedenen Wählmöglichkeiten P, R, N, D das Stellelement dann jeweils eine bestimmte Betätigungsstellung einnehmen.

Um dafür zu sorgen, dass das Stellelement bzw. das gesamte Betätigungssystem bei einmal erlangter Betätigungsstellung nicht undefiniert und ungewollt sich aus dieser Betätigungsstellung heraus bewegen kann und beispielsweise in eine andere Betätigungsstellung gelangt, ist es möglich, eine Vorspannung bereit zu stellen, die das Betätigungselement in eine solche Betätigungsstellung vorspannt und deren Vorspannkraft überwunden werden muss, um das Betätigungselement aus dem Bereich dieser Betätigungsstellung heraus zu bewegen.

Bedingt durch Fertigungstoleranzen und auch Toleranzen beim Zusammenfügen derartiger Betätigungssysteme besteht das Problem, dass zwar grundsätzlich bekannt ist, in welchem Bereich ein Stellelement zu Positionieren ist, um sicherzustellen, dass eine bestimmte Betätigungsstellung erlangt ist, dass jedoch dieser Bereich bedingt durch die angesprochenen Toleranzen vergleichsweise groß ist. Eine nur ungenaue Kenntnis der verschiedenen Betätigungsstellungen kann zur Folge haben, dass bei Durchführung von Betätigungsvorgängen durch Aktivierung einer Aktuatoranordnung eine in einem Getriebegang konkret vorhandene Betätigungsstellung nicht präzise angefahren wird, so dass die Gefahr besteht, dass das Stellelement und somit das gesamte Betätigungssystem nicht in dieser Stellung verbleibt, sondern möglicherweise bedingt durch äußere Einflüsse sich in Richtung seiner anderen Betätigungsstellung bewegt. Auch kann das nicht präzise Positionieren in einer Betätigungsstellung zur Folge haben, dass nachfolgend ein anderer Bewegungsablauf nicht mit der gewünschten Präzision erfolgen kann.

Es ist die Aufgabe der vorliegenden Erfindung, ein Verfahren zum Ermitteln einer Betätigungsstellung bei einem Getriebebetätigungssystem vorzusehen, durch welches in einfacher, gleichwohl jedoch präziser Art und Weise die in einem Getriebe bzw. einem Getriebebetätigungssystem vorhandenen Betätigungsstellungen eingelernt werden können.

Gemäß einem ersten Aspekt der Erfindung wird diese Aufgabe gelöst durch ein Verfahren, das die Merkmale des Anspruchs 1 aufweist.

Um das System am Beginn des erfindungsgemäßen Verfahrens in den Bereich der gesuchten Betätigungsstellung bringen zu können bzw. nach gefundener Betätigungsstellung festlegen zu können, wo im Winkelbereich oder im Linearverschiebebereich diese Betätigungsstellung exakt liegt, ist dem Betätigungselement eine Stellungserfassungsanordnung zugeordnet um dessen Stellung zu erfassen, um dann, wenn bestimmt wird, dass eine bestimmte Betätigungsstellung vorliegt, eine Verknüpfung zwischen der Betätigungsstellung und der dann vorhandenen Ausgabe dieser Anordnung bereit stellen zu können.

Erwähnenswert ist bei diesem Verfahren, dass beim Einlernen einer Betätigungsstellung nicht eine einmalige statische Bewegung in Richtung zu einer vermuteten Betätigungsstellung erfolgt und beispielsweise dann, wenn die Betätigungskraft minimal wird, angenommen wird, dass die Betätigungsstellung erreicht ist. Vielmehr wird in einem kontinuierlichen Bewegungsprozess die Betätigungsstellung durch allmähliches Verringern der Betätigungskräfte bzw. der Auslenkung des Stellelements bei der Hin- und Herbewegung eine zunehmend genauer werdende Eingrenzung der Betätigungsstellung erlangt. Auf Grund der während des gesamten Einlernvorgangs vorhandenen Bewegung des Stellelements können durch Haftreibmomente induzierte Ungenauigkeiten beim Anfahren der Betätigungsstellungen minimiert werden, so dass am Ende der erfindungsgemäßen Prozedur, also beispielsweise dann, wenn bei noch minimal vorhandener Betätigungskraft keine Auslenkung des Stellelements mehr erfolgt, mit sehr hoher Präzision bestimmt werden kann, dass die dann vorhandene Stellung des Betätigungselements auf die gesuchte Betätigungsstellung ist, nämlich diejenige Stellung, in welcher die im Bereich der Vorspannanordnung vorhandene potentielle Energie minimiert ist.

Um bei Durchführung des erfindungsgemäßen Verfahrens eine möglichst rasche Konvergenz in Richtung zu der gesuchten Betätigungsstellung erlangen zu können, wird vorgeschlagen, dass am Beginn der Maßnahme b) das Betätigungselement derart beaufschlagt wird, dass es nicht aus dem Vorspannbereich heraus bewegt werden kann. Auf diese Art und Weise ist sichergestellt, dass von Anfang an die Hin und Herbewegung des Betätigungselements auf den Wirkbereich der einer bestimmten Betätigungsstellung zugeordneten Vorspannanordnung beschränkt ist.

Um sicherzustellen, dass bei der Hin und Herbewegung des Betätigungselements eine symmetrische Annäherung an die Betätigungsstellung stattfinden kann, wird vorgeschlagen, dass während einer Periode der Hin- und Herbewegung des Betätigungselements die dabei auf dieses in entgegengesetzten Richtungen einwirkenden Betätigungskräfte im Wesentlichen gleich sind. Dabei kann dann weiter vorgesehen sein, dass die Maßnahme c) das Verringern der auf das Betätigungselement einwirkenden Betätigungskräfte oder/und der Auslenkung jeweils nach einer Periode der Hin- und Herbewegung des Betätigungselements umfasst.

Das Verringern der auf das Betätigungselement einwirkenden Betätigungskräfte bzw. der Auslenkung des Betätigungselements kann in vorgegebenen Schritten erfolgen. Diese Schritte bzw. die Schrittgröße kann jeweils angepasst sein an bestimmte Getriebesysteme bzw. Betätigungssysteme bzw. auch die Konfiguration der Vorspannanordnung. Weiterhin kann vorgegebenen sein, dass beispielsweise bei Annäherung an die gesuchte Betätigungsstellung mit der Verringerung der Betätigungskräfte bzw. der Auslenkung auch die Schrittgröße verändert, beispielsweise verringert wird, um eine noch präzisere Eingrenzung der Betätigungsstellung erlangen zu können.

Gemäß einem weiteren Aspekt, kann bei dem erfindungsgemäßen Verfahren vorgesehen sein, dass bei der Maßnahme b) nach Beaufschlagen des Betätigungselements mit einer Betätigungskraft in einer der entgegengesetzten Richtungen dieses dann mit einer Betätigungskraft in der anderen der entgegengesetzten Richtungen beaufschlagt wird, wenn bei Beaufschlagung in der einen der entgegengesetzten Richtungen im Wesentlichen keine weitere Bewegung des Betätigungselements erzeugt wird.

Weiter kann vorgesehen sein, dass bei der Maßnahme b) nach Beaufschlagen des Betätigungselements mit einer Betätigungskraft in einer der entgegegesetzten Richtungen dieses dann mit einer Betätigungskraft in der anderen der entgegengesetzten Richtungen beaufschlagt wird, wenn bei Beaufschlagung in der einen der entgegengesetzten Richtungen ein vorgegebener Bewegungsbereich durchlaufen ist oder/und eine vorgegebene Auslenkungsamplitude erreicht ist.

Es hat sich gezeigt, dass eine möglichst schnelle Konvergenz in Richtung zu der gesuchten Stellung dadurch erlangt werden kann, dass bei der Maßnahme b) dasjenige Kriterium von Bewegungsstillstand bei Kraftbeaufschlagung und Erreichen einer vorgegebenen Auslenkung bzw. Durchlaufen eines vorgegebenen Bewegungsbereichs zur Beaufschlagung mit einer in der entgegengesetzten Richtung wirkenden Betätigungskraft herangezogen wird, das als erstes erfüllt ist.

Um von Anfang an eine möglichst präzise Ausgangsbasis bei der Suche nach einer bestimmten Betätigungsstellung bereit stellen zu können wird vorgeschlagen, dass bei der Maßnahme a) das Betätigungselement in eine Stellung gebracht wird, die einer angenommenen Lage der Betätigungsstellung entspricht. Da grundsätzlich der konstruktive Aufbau eines Getriebes bzw. des zugeordneten Getriebebetätigungssystem bekannt ist, ist, behaftet mit bestimmten Ungenauigkeiten, grundsätzlich auch die Lage der Betätigungsstellungen, beispielsweise in einem bestimmten Drehwinkelbereich oder einem bestimmten Linearverschiebebereich, bekannt. Diese Kenntnis kann genutzt werden, um auch auf diese Art und Weise das Auffinden der gesuchten Betätigungsstellung bzw. das Bestimmen der exakten Lage dieser gesuchten Betätigungsstellung möglichst schnell durchführen zu können.

Die Vorspannanordnung kann eine Rastanordnung umfassen.

Insbesondere bei Betätigungssystemen bzw. Getrieben, bei welchen in einem Bewegungsmodus, also beispielsweise einem Linearbewegungsmodus oder einem Drehbewegungmodus, mehrere Betätigungsstellung im Bewegungsspektrum aufeinander folgen, sicher zu stellen, dass all diese Betätigungsstellungen präzise angegeben und nachfolgend im Getriebebetrieb angefahren werden können, wird vorgeschlagen, dass die Maßnahmen a) - d) nacheinander zur Ermittlung mehrerer Betätigungsstellungen durchgeführt werden. Dies trifft selbstverständlich auch dann zu, wenn verschiedene Bewegungsmodi zum Betätigen des Getriebes kombiniert werden müssen, also beispielsweise zunächst mit einem Linearverschiebemodus eine Gassenwahl stattfindet, wobei jeder aufgefundenen Gasse eine bestimmte Betätigungsstellung zugeordnet sein kann, und dann in einem Drehbewegungmodus des Betätigungselements in der ausgewählten Gasse ein Gang ein- bzw. ausgelegt werden muss, wobei auch hier der Neutralstellung in der Gasse bzw. den jeweiligen Gangstellungen in der Gasse jeweils eine Betätigungsstellung zugeordnet sein kann.

Gemäß einem weiteren Aspekt der vorliegenden Erfindung wird die eingangs genannte Aufgabe gelöst durch ein Verfahren zum Ermitteln einer Betätigungsstellung bei einem Getriebebetätigungssystem, welches Getriebebetätigungssystem ein durch eine Aktuatoranordnung in eine Mehrzahl von Betätigungsstellungen bringbares Betätigungselement umfasst, wobei dem Betätigungselement für wenigstens eine der Betätigungsstellungen eine Vorspannanordnung zugeordnet ist, welche dann, wenn das Betätigungselement eine in einem Vorspannbereich um die Betätigungsstellung liegende Stellung aufweist, das Betätigungselement in Richtung Betätigungsstellung vorspannt, welches Verfahren die in Anspruch 13 definierte Maßnahmen aufweist.

Bei diesem Verfahren wird also so vorgegangen, dass zunächst das Betätigungselement am Beginn des Verfahrens so hin und her bewegt wird, dass die Bewegungsendstellungen erreicht werden, also in maximal möglichem Ausmaß hin und her bewegt wird, wobei bei dieser Hin und Herrbewegung der Wirkbereich der Vorspannanordnung, die einer an sich gesuchten Betätigungsstellung zugeordnet ist, überschritten werden kann. Durch das dann vorgenommene kontinuierliche Verringern der Auslenkung bzw. Verringern der Betätigungskräfte, kann ebenso wie vorangehend beschrieben eine allmähliche Eingrenzung des Bewegungsbereichs erlangt werden, so dass auch hier am Ende des Verfahrens ein Stillstand erreicht werden kann, wenn die gesuchte Betätigungsstellung vorliegt, oder dann, wenn ein bestimmtes Bewegungsspiel im System vorhanden ist, eine diesem Bewegungsspiel entsprechende Hin und Her-Bewegung weiterhin möglich ist, so dass in dem Hin und Herbewegungsbereich dann beispielsweise die Mittenstellung als die gesuchte Betätigungsstellung definiert werden kann.

Die vorliegende Erfindung wird nachfolgend mit Bezug auf die beiliegenden Zeichnungen detailliert beschrieben. Es zeigt:
- Fig. 1: ein Betätigungselement eines Getriebebetätigungssystems mit einer zugeordneten Vorspannanordnung, anhand welchem prinzipiell die Funktionsweise eines derartigen Getriebebetätigungssystem beschrieben wird;
- Fig. 2: aufgetragen über dem Drehwinkel eines Betätigungselements den Verlauf des Rastmoments bzw. der Rastkraft der verschiedenen Betätigungsstellungen, die beispielsweise das Betätigungselement der Fig, 1 einnehmen kann, entsprechenden Wählstellungen eines Automatikgetriebes;
- Fig. 3: aufgetragen über der Zeit den Auslenkungswinkel eines Betätigungselements bei der Durchführung des erfindungsgemäßen Verfahrens;
- Fig. 4: ein der Fig. 3 entsprechendes Diagramm, welches die Durchführung des erfindungsgemäßen Verfahrens mit veränderter Anfangsposition veranschaulicht.

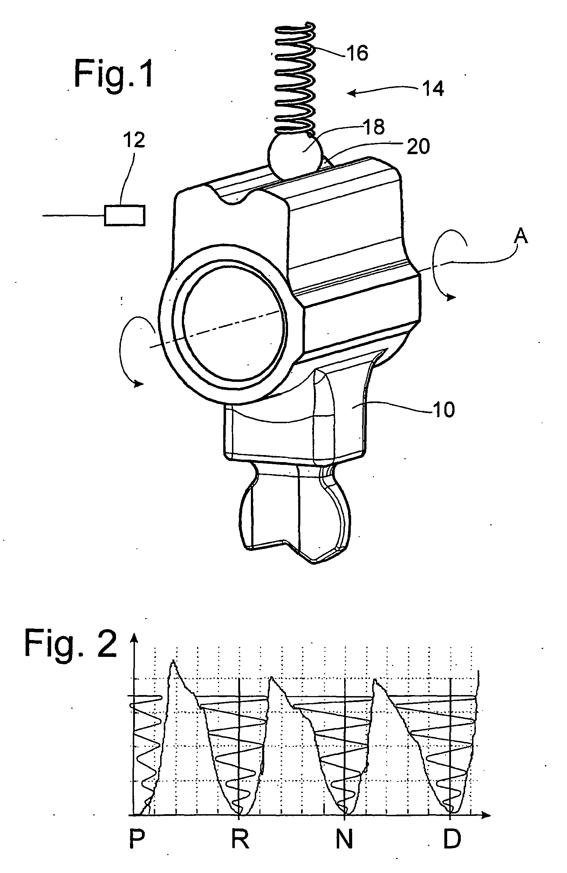

In Fig. 1 ist ein Teil eines Getriebebetätigungssystems erkennbar. Dieses in Figur 1 dargestellte Teil ist ein so genannter Schaltfinger 10, der auf einer nicht dargestellten Schaltwelle getragen ist und zusammen mit dieser Schaltwelle um eine Drehachse A drehbar bzw. verschwenkbar ist. Bei Einsatz in einem automatisierten Schaltgetriebe kann beispielsweise durch diese Drehbewegung bzw. Verschwenkbewegung des Schaltfingers 10 die Auswahl einer Schaltgasse erfolgen, wobei dann, wenn eine bestimmt Schaltgasse ausgewählt ist, durch Verschieben der Schaltwelle zusammen mit dem Schaltfinger einer der in dieser ausgewählten Schaltgasse vorhandenen Gänge aus- bzw. eingelegt werden kann. Bei Einsatz in einem Automatikgetriebe kann durch Bewegen des Schaltfingers 10 in eine von vier möglichen Drehstellungen im Getriebe eine Auswahl von einem der vier Zustände P, R, N und D erfolgen.

Jeder dieser möglichen Wahlstellungen bzw. Schaltstellungen in einem automatisierten Schaltgetriebe entspricht eine bestimmte Betätigungsstellung des Getriebebetätigungssystems bzw. auch des in der Fig. 1 dargestellten als Betätigungselement beispielsweise interpretierbaren Schaltfingers 10. Diesem Schaltfinger 10 kann eine Sensorik 12 zugeordnet sein, die dessen Stellung, beispielsweise Drehstellung oder/und Linearverschiebestellung, erfasst und ein entsprechendes Signal in eine Ansteuervorrichtung für eine nicht dargestellte Aktuatoranordnung des Getriebebetätigungssystems eingeben kann. Auf diese Art und Weise kann das Betätigungssystem 10 präzise in eine vorbestimmte Stellung gebracht werden, um beispielsweise einen der vier Wählzustände P, R, N, D anzufahren.

Um einerseits das Anfahren bzw. Auswählen derartiger konkret vorgegebener Betätigungsstellungen zu erleichtern und andererseits sicher zu stellen, dass bei einmal eingenommener Betätigungsstellung eine ungewollte Herausbewegung des Schaltfingers 10 bzw. des gesamten Betätigungssystems verhindert wird, kann dem Getriebebetätigungssystem, beispielsweise direkt im Schaltfinger 10 eine in der Fig. 1 schematisch angedeutete Vorspannanordnung 14 zugeordnet sein. Diese kann eine Vorspannfeder 16 umfassen, die ein Rastelement, hier beispielsweise eine Rastkugel 18, in eine Rastausnehmung 20 des Schaltfingers 10 bzw. einer damit fest gekoppelten Komponente hineinpresst.

Durch diese als Rastmechanismus wirksame Vorspannanordnung 14 wird sichergestellt, dass der Schaltfinger 10 in der in der Fig. 1 dargestellten Betätigungsstellung definiert gehalten ist bzw. definiert in diese Stellung vorgespannt wird. Es sei hier darauf hingewiesen, dass in Fig. 1 nur in Zuordnung zu der konkret gezeigten Betätigungsstellung eine derartige Rastwirkung dargestellt ist. Selbstverständlich können auch für mehrere um bestimmte Winkelbeträge zueinander verschobene Betätigungsstellungen jeweilige Rastwirkungen erlangt werden, wenn beispielsweise in Umfangsrichtung um die Drehachse A aufeinander folgend mehrere der Aussparungen 20 am Schaltfinger 10 vorgesehen sind. Auch für eine Verschiebung in der Richtung der Drehachse A kann eine derartige Rastfunktion sichergestellt werden.

Die Fig. 2 zeigt schematisch aufgetragen über dem auf der X-Achse repräsentierten Drehwinkel den Verlauf eines Rastmomentes bzw. einer Rastkraft bei einem Getriebebetätigungssystem für ein Automatikgetriebe. Man erkennt die vier möglichen Wählzustände P, R, N, D, wobei jeder dieser Wählzustände repräsentiert ist durch eine mögliche Betätigungsstellung beispielsweise des Schaltfingers 10 der Fig. 1. Ferner ist in Zuordnung zu jeder dieser Betätigungsstellungen eine Vorspannanordnung, also Vorspannwirkung, vorgesehen, so dass sichergestellt ist, dass der Schaltfinger 10 in jede dieser Stellungen P, R, N, D vorgespannt werden kann. Auf der y-Achse ist in beliebigen Einheiten dieses Rastmoment bzw. die Rastkraft vorgesehen. Man erkennt, dass bei jeweils exakt eingenommener Betätigungsstellung dieses Moment bzw. die Rückstellkraft minimal ist, während mit zunehmender Auslenkung, bedingt durch das zunehmende Spannen der Feder 16, die in Richtung der jeweiligen Betätigungsstellung vorspannende Kraft zunimmt, und zwar solange, bis die Auslenkung so groß ist, dass beispielsweise die Kugel 18 die Tendenz haben wird, sich in eine benachbarte Aussparung 20 hineinzubewegen, so dass dann ein Übergang zu der Vorspannwirkung erlangt wird, die in Zuordnung zu einer unmittelbar benachbarten Betätigungsstellung vorgesehen ist. Die in Zuordnung zu den verschiedenen Betätigunsstellung P, R, N, D hier vorgesehenen, näherungsweise parabelartigen Verläufe können letztendlich auch als "Rastpotential" interpretiert werden, wobei dann, wenn eine bestimmte Betätigungsstellung eingenommen ist, das Potential bzw. die potentielle Energie minimal wird und mit Auslenkung aus dieser Betätigungsstellung heraus die potentielle Energie ansteigt und somit das System wieder die Neigung haben wird, den Zustand minimaler potentieller Energie einzunehmen.

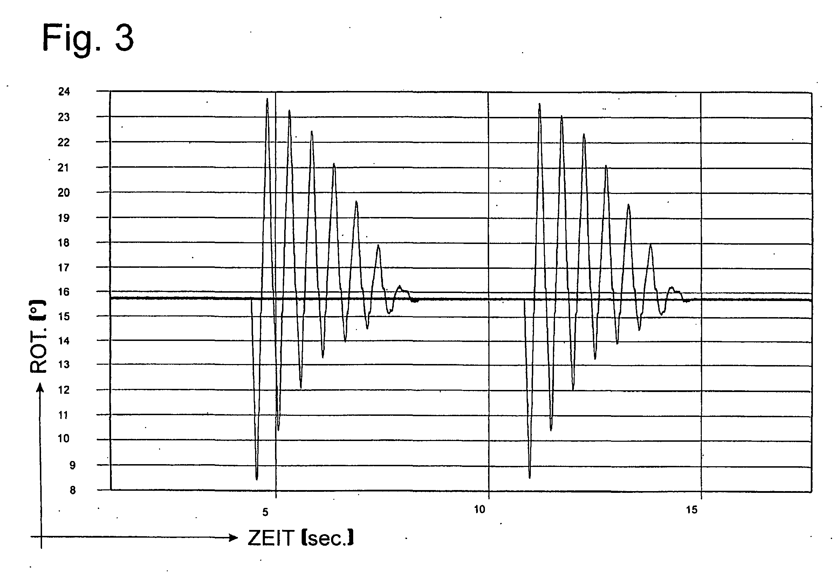

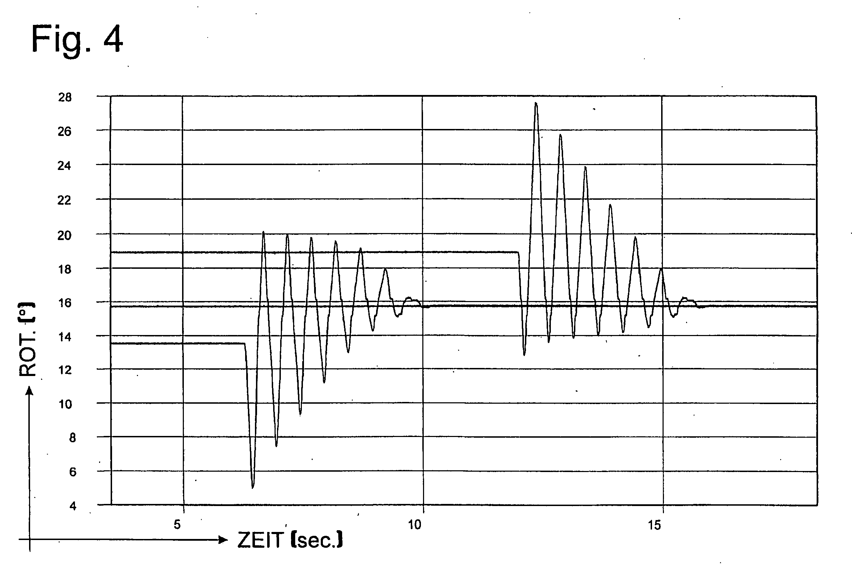

Grundsätzlich ist es beim Aufbau derartiger Betätigungsysteme bekannt, in welchen Drehlagen beispielsweise einer Schaltwelle oder des Schaltfingers 10 die verschiedenen einzunehmenden Betätigungsstellungen vorliegen. Selbiges gilt selbstverständlich auch für Linearverschiebbewegungen. D.h., soll beispielsweise die N-Stellung angefahren werden, so kann dies dadurch erfolgen, dass der Winkel vorgegeben wird, auf welchen der Schaltfinger geschwenkt werden soll, wobei hier die Rückkopplungsinformation durch die Sensorik 12 erlangt wird. Liegt dieser Winkel beispielsweise, wie anhand der Figuren 3 und 4 nachfolgend detaillierter erläutert, bei etwa 16°, ausgehend von einer als Nullpunkt zu identifizierenden Referenzposition, so könnte also die Aktuatorik auf der Grundlage dieses Sollwertes und des von der Sensorik 12 gelieferten Winkel-Istwertes angesteuert werden, bis beispielsweise der Winkel 16° angefahren ist. Liegt der Winkel 16° vor, so könnte grundsätzlich davon ausgegangen werden, dass das System auch in der gewünschten Betätigungsstellung ist. Bedingt durch Fertigungstoleranzen bestehen jedoch zwischen den theoretisch vorgegebenen Lagen für diese jeweiligen Betätigungsstellungen und den in einem konkret aufgebauten System tatsächlich vorhandenen Stellungen im Allgemeinen Abweichungen. Werden diese Abweichungen nicht berücksichtigt, so besteht grundsätzlich die Gefahr, dass die Betätigungsvorgänge nicht mit der erforderlichen Präzision durchgeführt werden und infolgedessen auch die verschiedenen Wähl- bzw. Schaltvorgänge nicht mit der erforderlichen Qualität ablaufen können.

Es wird gemäß der vorliegenden Erfindung daher nach dem Aufbauen eines derartigen Systems eine Einlernprozedur durchgeführt, mit welcher zunächst die in diesem bestimmten System grundsätzlich vorhandenen und hinsichtlich ihrer theoretischen Lage an sich bekannten Betätigungsstellungen eingelernt werden.

Bei dieser Prozedur kann wie folgt vorgegangen werden:

Es sei angenommen, dass beispielsweise bei dem in den Figuren 1 und 2 gezeigten System die N-Stellung zunächst eingelernt werden soll.

Da grundsätzlich bekannt ist, in welchem Bereich, also beispielsweise Winkelbereich, diese N-Stellung liegt und in welchem Winkelbereich auch die dieser N-Stellung zugeordnete Rastanordnung wirksam ist, kann zum Beschleunigen der Einlernprozedur zunächst das System so gestellt werden, dass beispielsweise der Schaltfinger 10 als Betätigungselement bereits in diesem Bereich in der Nähe der an sich zu suchenden Betätigungsstellung, also der N-Stellung, positioniert ist. Nachfolgend wird dann durch entsprechende Erregung der Aktuatoranordnung das Betätigungselement, also beispielsweise der Schaltfinger 10, zyklisch hin- und her bewegt bzw. ausgelenkt. Dies kann beispielsweise dadurch erfolgen, dass an das anzutreibende Organ, also beispielsweise eine Schaltwelle oder den Schaltfinger 10 direkt, ein bestimmtes Drehmoment bzw. eine bestimmte Kraft angelegt wird. Das Anlegen einer derartigen Kraft hat zur Folge, dass in dem angesprochenen Potentialtopf eine Auslenkung stattfinden wird, und zwar so weit, bis die durch die Rastanordnung vorgesehene Rückstellkraft die angelegte Kraft kompensiert. Hier kann ebenfalls vorzugsweise derart vorgegangen werden, dass sichergestellt ist, dass die am Anfang der Einlernprozedur angelegte Kraft nicht ausreicht, das System aus dem Wirkbereich der Vorspannanordnung der an sich gesuchten Betätigungsstellung herausbewegt werden kann. Liegt diese Kräftegleichheit zwischen Betätigungskraft einerseits und Vorspannkraft andererseits vor, wird die Aktuatoranordnung zur Erzeugung einer Kraft in der entgegengesetzten Richtung angesteuert, um nunmehr eine in entgegengesetzter Richtung erfolgende Bewegung des Betätigungselements zu induzieren. Bei dieser Bewegung wird dieses Betätigungselement im Allgemeinen sich über die gesuchte Betätigungsstellung hinausbewegen, und zwar so weit, bis auch auf der anderen Seite wieder ein Kräftegleichgewicht vorhanden ist. Vorzugsweise wird derart vorgegangen, dass bei einem Zyklus der Hin- und Herbewegung die in den entgegengesetzten Richtungen anzulegenden Kräfte gleichgehalten sind. Für den nächsten Zyklus wird jedoch die Kraft verringert, so dass das Kräftegleichgewicht zwischen Betätigungskraft und Vorspannkraft bzw. Rückstellkraft bereits bei einer geringeren Abweichung von der an sich gesuchten Betätigungsstellung erlangt wird.

Dieser Vorgang des zyklischen Hin- und Herbewegens und Verringerns der Betätigungskraft mit dementsprechend abnehmender Amplitude der Auslenkung des von der Ansteueranordnung beaufschlagten Betätigungselements führt zu einer kontinuierlichen Eingrenzung der Betätigungsstellung, was in Fig. 1 durch die den zeitlichen Verlauf der Winkelbewegung des Betätigungselements repräsentierenden Schlangenlinien erkennbar wird.

Bei zunehmender Annäherung an das Minimum des Potentialtopfs, welches grundsätzlich mit der gesuchten Betätigungsstellung übereinstimmen soll, wird der Fall auftreten, dass die durch die Aktuatoranordnung erzeugte und auf das zu bewegende Betätigungselement einwirkende Kraft bzw. das entsprechende Moment kleiner wird, als das in der jeweiligen Betätigungsstellung vorhandene minimale Rastmoment der jeweiligen Rastanordnung. Dies wiederum hat zur Folge, dass mit der anliegenden Kraft eine weitere Auslenkung des Betätigungselements nicht mehr erzeugt werden kann. Dies kann dadurch erkannt werden, dass beispielsweise das Anlegen einer vorbestimmten Spannung an einen Antriebsmotor der Aktuatoranordnung keine Winkeländerung, erfasst durch die Sensorik 12, induzieren wird. Ist dies der Fall, so kann unterstellt werden, dass die in dieser Phase dann vorhandene Stellung des Betätigungselements mit der gesuchten Betätigungsstellung übereinstimmt, so dass der auf der Grundlage der Ausgabe der Sensorik 12 dann definierte oder ermittelte Winkel als die gesuchte Betätigungsstellung bzw. als der gesuchten Betätigungsstellung zugeordneter Winkel interpretiert werden kann.

Ist diese Prozedur für eine der Betätigungsstellungen durchgeführt worden, so kann das System in den Bereich einer weiteren Betätigungsstellung, also beispielsweise der D-Stellung, bewegt werden, um auch für diese Betätigungsstellung den exakten Winkel bestimmen zu können. Auf diese Art und Weise kann das gesamte Getriebebetätigungssystem bzw. das Getriebe hinsichtlich der Lage der verschiedenen möglichen Betätigungsstellungen ausgewertet werden, wobei diese erfassten Lagen, also beispielsweise Winkellagen, selbstverständlich aber auch Linearverschiebelagen dann in einem Speicher abgelegt werden können, um bei durchzuführenden Betätigungsvorgängen dann auf diese Lagen als Sollwerte zugreifen zu können.

Die bei Durchführung der vorangehend beschriebenen Prozedur sich ergebende Konvergenz in Richtung zu der gesuchten Betätigungsstellung ist in den Figuren 3 und 4 anhand Versuchsmessungen dargestellt. So erkennt man in Fig. 3 ein System, bei welchem beispielsweise theoretisch eine Betätigungsstellung bei 16° liegen sollte, wie die Einlernprozedur aber ergibt, tatsächlich bei 15,8° liegt. Man erkennt das Einstellen des Systems zunächst auf eine Lage, die im Bereich der gesuchten Betätigungsstellung, also bei etwa 16° liegt, und dann das zyklische Auslenken eines in Rotation zu bewegenden Elements mit abnehmender Betätigungskraft und dementsprechende abnehmender Amplitude. In beiden in der Fig. 3 erkennbaren aufeinander folgend durchgeführten Versuchen zeigt sich eine eindeutige Konvergenz in Richtung zu einem Winkel von etwa 15,8°.

Bei den in Fig. 4 repräsentierten Versuchen wurde die Anfangslage des Betätigungselements mit größerer Abweichung von der an sich gesuchten Betätigungsstellung vorgegeben. So wurde einmal mit etwa 13,5°, im zweiten Versuch mit etwa 19° begonnen. Auch hier ergab sich eine eindeutige Konvergenz in Richtung zu dem tatsächlich vorhandenen Winkel von etwa 15,8° für die gesuchte Betätigungsstellung.

Es sei darauf hingewiesen, dass selbstverständlich bei der vorangehend beschriebenen Prozedur verschiedene Abweichungen im Ablauf vorgenommen werden können. So kann beispielsweise am Anfang der Prozedur mit einer Auslenkung bzw. einer Betätigungskraft gearbeitet werden, die zur Folge hat, dass der Wirkbereich einer Vorspannanordnung überschritten wird und beispielsweise das System in den Wirkbereich einer benachbarten Vorspannanordnung gelangt. Da jedoch bei der erfindungsgemäßen Prozedur so vorgegangen wird, dass bei einem zyklischen Durchlauf der Hin- und Herbewegung die in beiden Richtungen bereitzustellenden Betätigungskräfte bzw. Amplituden gleich sein sollen, wird auch sichergestellt, dass der Wirkbereich der benachbarten Vorspannanordnung verlassen wird und beispielsweise in den Wirkbereich einer auf der anderen Seite benachbarten Vorspannanordnung übergegangen wird. Auch hier hat jedoch die zunehmende Konvergenz in Richtung kleinerer Betätigungskraft bzw. in Richtung kleinere Auslenkungsamplitude zur Folge, dass irgendwann das System innerhalb des Wirkbereichs der Vorspannanordnung verbleibt, die der an sich gesuchten Betätigungsstellung zugeordnet ist.

Bei dem vorangehend beschriebenen Beispiel wurde als Kriterium für die Umsteuerung des Antriebs, d.h. als Kriterium zum Erzeugen einer in entgegengesetzter Richtung wirkenden Betätigungskraft, das Kräftegleichgewicht zwischen der bereitgestellten Betätigungskraft und einer Rückstellkraft angegeben. Es kann gemäß einem weiteren vorteilhaften Aspekt aber vorgesehen sein, dass zumindest in einer Anfangsphase der Prozedur bei Bereitstellung einer zunächst definierten und dann allmählich abnehmenden Betätigungskraft nicht das Kräftegleichgewicht, also im Prinzip einen Bewegungsstillstand, als Umkehrkriterium angenommen wird, sondern das Erreichen einer bestimmten Auslenkung, ausgehend beispielsweise von der anfangs vorhandenen Ausgangsstellung, oder eine gewisse Gesamtbewegung bezogen auf die letzte Bewegungsumkehr in der anderen Richtung. Dabei wird zunächst die Betätigungskraft noch so groß sein, dass sie ausreicht, um dieses Kriterium zu erfüllen bzw. zu erreichen und somit eine Umsteuerung zu erlangen. Mit zunehmendem Verringern der Betätigungskraft wird diese jedoch nicht mehr ausreichen, die vorgegebene Bewegungsamplitude oder den vorgegebenen Bewegungsbereich vollständig zu durchlaufen bzw. zu erreichen, so dass noch vor Erreichen beispielsweise einer bestimmten Auslenkung das Kriterium des Kräftegleichgewichts und somit ein Bewegungsstillstand eintritt. Dies wird ab dieser Phase dann auch als Umkehrkriterium herangezogen, da die zuvor vorgegebene und als Umkehrkriterium vorhandene Amplitude bzw. der vorgegebene Bewegungsbereich dann nicht mehr erreichbar bzw. ausnutzbar ist. Die weitere Prozedur kann dann bis zum Auffinden der gewünschten Stellung mit dem Kräftegleichgewicht bzw. dem Bewegungsstillstand als Umsteuerkriterium durchlaufen werden. Selbstverständlich ist es möglich, in der Anfangsphase auch eine Abstufung bei der Auslenkung bzw. beim Bewegungsbereich vorzusehen, so dass durch zunehmendes Eingrenzen bzw. Verringern des Bewegungsbereichs bzw. der Amplitude auch bereits hier bei zunächst noch als Umkehrkriterium wirkender Auslenkung eine gewisse Konvergenz erzwungen werden kann.

Bei spielbehafteten Systemen, bei welchen eine Eingrenzung auf eine eindeutige Stellung nicht möglich ist, sondern bei Vorliegen der Betätigungsstellung eine minimale Hin- und Herbewegung möglich ist, so lange die auf das Betätigungselement einwirkende Betätigungskraft größer ist, als die vorhandenen Reibkräfte, kann so vorgegangen werden, dass die beiden Endlagen dieser dann noch möglichen und in ihrer Amplitude sich nicht mehr ändernden Hin- und Herbewegung erfasst werden, um einen Bereich einzugrenzen, in dem dann zwangsweise die gesuchte Betätigungsstellung liegen wird. Es kann dann beispielsweise der Mittelwert dieses Bereichs als die gesuchte Betätigungsstellung festgelegt bzw. definiert werden.

Weiter ist es möglich, am Beginn der Einlernprozedur, beispielsweise dann, wenn über einen größeren Bewegungsbereich hinweg nur eine mit einer Rastwirkung behaftete Betätigungsstellung vorhanden ist, eine Anfangsposition anzufahren, die noch außerhalb des Wirkbereichs dieser Rastanordnung liegt, so dass nachfolgend beim alternierenden Hin- und Herbewegen in den Wirkbereich der Rastanordnung eingetreten wird und bei dann weiter abnehmender Betätigungskraft bzw. Auslenkungsamplitude eine Konvergenz in Richtung zur gesuchten Betätigungsstellung erzeugt wird.

Insbesondere bei so genannten automatisierten Schaltgetrieben, bei welchen wie vorangehend bereits erläutert, in einem Gangschaltmodus das Betätigungselement zwischen zwei Bewegungsstellungen hin- und her bewegt werden kann, nämlich denjenigen Stellungen, in welchen jeweils einer der Gänge eingelegt ist, während der andere ausgelegt ist, kann die erfindungsgemäße Prozedur so durchgeführt werden, dass beispielsweise dann, wenn die Neutralstellung zwischen diesen beiden Bewegungsendstellungen, also diejenige Stellung, in welcher dann eine Gassenwahl möglich wird, gesucht wird, am Beginn der Prozedur mit maximal möglicher Bewegungsamplitude gearbeitet wird, also zunächst eine Hin- und Herbewegung zwischen den beiden Bewegungsendstellungen erfolgt. Diese Bewegung wird dann durch Verringern der Amplitude zunehmend eingegrenzt und zwar so, dass die jeweilige Bewegungsumkehr einen größer werdenden Abstand zu einer jeweiligen Bewegungsendlage aufweist. Auch hier findet dann eine Konvergenz statt, und zwar eine Konvergenz in denjenigen Bereich, in welchem letztendlich die der gesuchten Betätigungsstellung, also beispielsweise der Neutralstellung, zugeordnete Vorspannanordnung wirksam ist, so dass auch hier dann bedingt durch die vorangehend erläuterten Kräfteverhältnisse sich ein Zustand einstellen wird, bei welchem das Betätigungselement eine Lage einnimmt, die der gesuchten Betätigungsendstellung entspricht oder in einem Bewegungsspielbereich noch bewegbar ist, der diese Betätigungsstellung abdeckt.

Bei allen vorangehend beschriebenen Varianten kann diese erfasste Stellung bzw. der Spielbereich dann in einer Plausibilitätsüberprüfung ausgewertet werden, und zwar dahingehend, ob Übereinstimmung mit bestimmten Vorgaben besteht, also beispielsweise Vorgaben hinsichtlich der theoretischen Lage der zu ermittelnden Position. Ist hier eine zu große Abweichung vorhanden, also eine Abweichung, die auch unter Berücksichtigung der allgemein akzeptierbaren Fertigungs- und Montagetoleranzen zu weit von der an sich gesuchten Betätigungsstellung entfernt liegt, so kann beispielsweise die Prozedur wiederholt werden, um möglicherweise bei der Durchführung der Prozedur aufgetretene Fehler zu eliminieren, oder es kann darauf geschlossen werden, dass in dem Getriebe oder dem Betätigungssystem des Getriebes Probleme vorliegen, die das exakte Auffinden einer gesuchten Betätigungsstellung nicht ermöglichen. Daraufhin kann dann beispielsweise eine genauere Untersuchung vorgenommen werden, um zu verhindern, dass ein möglicherweise defektes Getriebesystem in ein Fahrzeug integriert wird oder ein damit ausgestattetes Fahrzeug ausgeliefert wird.

## Patentansprüche

1. Verfahren zum Ermitteln einer Betätigungsstellung bei einem Getriebebetätigungssystem, welches Getriebebetätigungssystem ein durch eine Aktuatoranordnung in eine Mehrzahl von Betätigungsstellungen (P, R, N, D) bringbares Betätigungselement umfasst, wobei dem Betätigungselement (10) für wenigstens eine der Betätigungsstellungen (P, R, N, D) eine Vorspannanordnung (14) zugeordnet ist, welche dann, wenn das Betätigungselement (10) eine in einem Vorspannbereich um die Betätigungsstellung (P, R, N, D) liegende Stellung aufweist, das Betätigungselement (10) in Richtung Betätigungsstellung (P, R, N, D) vorspannt, welches Verfahren die folgenden Maßnahmen aufweist:
a) Bringen des Stellelements (10) in eine Anfangsstellung im oder nahe dem Vorspannbereich,
b) alternierendes Beaufschlagen des Betätigungselements (10) in entgegengesetzten Richtungen mit jeweiligen Betätigungskräften zum Hin- und Herbewegen des Betätigungselements (10) im Vorspannbereich,
c) während Durchführung der Maßnahme b) Verringern der Betätigungskräfte oder/und einer Auslenkung des Betätigungselements (10),
d) dann, wenn das Betätigungselement (10) bei vorhandener Kraftbeaufschlagung sich nicht mehr hin und her bewegt, Bestimmen der in diesem Zustand eingenommenen Stellung des Betätigungselements (10) als die Betätigungsstellung, oder wenn die Hin- und Herbewegung des Betätigungselements (10) auf einen vorbestimmten Bewegungsbereich beschränkt ist, Bestimmen einer Stellung des Betätigungselements (10) in dem Bewegungsbereich als die Betätigungsstellung,
**dadurch gekennzeichnet,**
**dass** dem Betätigungselement (10) eine Stellungserfassungsanordnung (12) zugeordnet ist zur Erfassung der Stellung des Betätigungselements (10) in Form einer Winkel-Istwertes

2. Verfahren nach Anspruch 1,
**dadurch gekennzeichnet, dass** am Beginn der Maßnahme b) das Betätigungselement (10) derart beaufschlagt wird, dass es nicht aus dem Vorspannbereich heraus bewegt werden kann.

3. Verfahren nach Anspruch 1 oder 2,
**dadurch gekennzeichnet, dass** während einer Periode der Hin- und Herbewegung des Betätigungselements (10) die auf dieses in entgegengesetzten Richtungen einwirkenden Betätigungskräfte im Wesentlichen gleich sind.

4. Verfahren nach einem der Ansprüche 1 bis 3,
**dadurch gekennzeichnet, dass** die Maßnahme c) das Verringern der auf das Betätigungselement (10) einwirkenden Betätigungskräfte oder/und der Auslenkung jeweils nach einer Periode der Hin- und Herbewegung des Betätigungselements (10) umfasst.

5. Verfahren nach einem der Ansprüche 1 bis 4,
**dadurch gekennzeichnet, dass** die Maßnahme c) das Verringern der auf das Betätigungselement (10) einwirkenden Betätigungskräfte oder/und der Auslenkung in vorgegebenen Schritten umfasst.

6. Verfahren nach Anspruch 5,
**dadurch gekennzeichnet, dass** die Schrittgröße veränderbar ist.

7. Verfahren nach einem der Ansprüche 1 bis 6,
**dadurch gekennzeichnet, dass** bei der Maßnahme b) nach Beaufschlagen des Betätigungselements (10) mit einer Betätigungskraft in einer der entgegengesetzten Richtungen dieses dann mit einer Betätigungskraft in der anderen der entgegengesetzten Richtungen beaufschlagt wird, wenn bei Beaufschlagung in der einen der entgegengesetzten Richtungen im Wesentlichen keine weitere Bewegung des Betätigungselements (10) erzeugt wird.

8. Verfahren nach einem der Ansprüche 1 bis 7,
**dadurch gekennzeichnet, dass** bei der Maßnahme b) nach Beaufschlagen des Betätigungselements (10) mit einer Betätigungskraft in einer der entgegengesetzten Richtungen dieses dann mit einer Betätigungskraft in der anderen der entgegengesetzten Richtungen beaufschlagt wird, wenn bei Beaufschlagung in der einen der entgegengesetzten Richtungen ein vorgegebener Bewegungsbereich durchlaufen ist oder/und eine vorgegebene Auslenkungsamplitude erreicht ist.

9. Verfahren nach Anspruch 7 und Anspruch 8,
**dadurch gekennzeichnet, dass** bei der Maßnahme b) dasjenige Kriterium von Bewegungsstillstand bei Kraftbeaufschlagung und Erreichen einer vorgegebenen Auslenkung bzw. Durchlaufen eines vorgegebenen Bewegungsbereichs zur Beaufschlagung mit einer in der entgegengesetzten Richtung wirkenden Betätigungskraft herangezogen wird, das als erstes erfüllt ist.

10. Verfahren nach einem der Ansprüche 1 bis 9,
**dadurch gekennzeichnet, dass** bei der Maßnahme a) das Betätigungselement (10) in eine Stellung gebracht wird, die einer angenommenen Lage der Betätigungsstellung entspricht.

11. Verfahren nach einem der Ansprüche 1 bis 10,
**dadurch gekennzeichnet, dass** die Vorspannanordnung (14) eine Rastanordnung (18, 20) umfasst.

12. Verfahren nach einem der Ansprüche 1 bis 11,
**dadurch gekennzeichnet, dass** die Maßnahmen a) - d) nacheinander zur Ermittlung mehrerer Betätigungsstellungen (P, R, N, D) durchgeführt werden.

13. Verfahren zum Ermitteln einer Betätigungsstellung bei einem Getriebebetätigungssystem, welches Getriebebetätigungssystem ein durch eine Aktuatoranordnung in eine Mehrzahl von Betätigungsstellungen (P, R, N, D) bringbares Betätigungselement (10) umfasst, wobei dem Betätigungselement (10) für wenigstens eine der Betätigungsstellungen (P, R, N, D) eine Vorspannanordnung (14) zugeordnet ist, welche dann, wenn das Betätigungselement (10) eine in einem Vorspannbereich um die Betätigungsstellung (P, R, N, D)liegende Stellung aufweist, das Betätigungselement (10) in Richtung Betätigungsstellung vorspannt, welches Verfahren die folgenden Maßnahmen aufweist:
a₁) alternierendes Beaufschlagen des Betätigungselements (10) in entgegengesetzten Richtungen mit jeweiligen Betätigungskräften zum Hin- und Herbewegen des Betätigungselements (10) zwischen zwei Bewegungsendstellungen,
b₁)während Durchführung der Maßnahme a₁) Verringern der Betätigungskräfte oder/und einer Auslenkung des Stellelements, so dass der Abstand zu den Bewegungsendstellungen bei Bewegungsumkehr zunimmt,
c₁) dann, wenn das Betätigungselement (10) bei vorhandener Kraftbeaufschlagung sich nicht mehr hin und her bewegt, Bestimmen der in diesem Zustand eingenommenen Stellung des Betätigungselements (10) als die Betätigungsstellung, oder wenn die Hin- und Herbewegung des Betätigungselements (10) auf einen vorbestimmten Bewegungsbereich beschränkt ist, Bestimmen einer Stellung des Betätigungselements (10) in dem Bewegungsbereich als die Betätigungsstellung,
**dadurch gekennzeichnet,**
**dass** dem Betätigungselement (10) eine Stellungserfassungsanordnung (12) zugeordnet ist zur Erfassung der Stellung des Betätigungselements (10)
in Form einer Winkel-Istwertes.

## Claims

1. Method of determining an actuating position in a transmission actuation system comprising an actuating element which can be brought into a plurality of actuating positions (P, R, N, D) by an actuator arrangement, the actuating element (10) having an associated biasing arrangement (14) for at least one of the actuating positions (P, R, N, D), which when the actuating element (10) occupies a position in a biasing range around the actuating position (P, R, N, D) biases the actuating element (10) towards an actuating position (P, R, N, D), the method comprising the following measures:
a) bringing the actuating element (10) into a starting position in or close to the biasing range,
b) alternate stressing of the actuating element (10) in opposing directions with respective actuating forces for reciprocating movement of the actuating element (10) in the biasing range,
c) reduction of the actuating forces and/or deflection of the actuating element (10) whilst performing measure b),
d) when the actuating element (10) no longer performs a reciprocating movement when acted upon by a force, determination of the position assumed by the actuating element (10) in this state as the actuating position, or when the reciprocating movement of the actuating element (10) is confined to a predefined range of movement, determination of a position of the actuating element (10) in the range of movement as the actuating position,
**characterized in that** a position registering arrangement (12) is associated with the actuating element (10) for registering the position of the actuating element (10) in the form of an actual angle value.

2. Method according to Claim 1, **characterized in that** on commencement of measure b) the actuating element (10) is acted upon in such a way that it cannot be moved out of the biasing range.

3. Method according to Claim 1 or 2, **characterized in that** during a period of the reciprocating movement of the actuating element (10) the actuating forces acting thereon in opposing directions are substantially equal.

4. Method according to any one of Claims 1 to 3, **characterized in that** measure c) consists in reduction of the actuating forces acting on the actuating element (10) and/or deflection after each period of the reciprocating movement of the actuating element (10).

5. Method according to any one of Claims 1 to 4, **characterized in that** measure c) consists in reduction of the actuating forces acting on the actuating element (10) and/or deflection in predefined stages.

6. Method according to Claim 5, **characterized in that** the magnitude of the stages is variable.

7. Method according to any one of Claims 1 to 6, **characterized in that** in measure b), after applying an actuating force to the actuating element (10) in one of the opposing directions an actuating force is applied to said element in the other opposing direction if no further movement of the actuating element (10) is produced when acted upon in one of the opposing directions.

8. Method according to any one of Claims 1 to 7, **characterized in that** in measure b), after applying an actuating force to the actuating element (10) in one of the opposing directions an actuating force is applied to said element in the other opposing direction if a predefined range of movement has been covered and/or a predefined deflection amplitude has been attained when acted upon in one of the opposing directions.

9. Method according to Claim 7 and Claim 8,
**characterized in that** of the criteria used for measure b): immobilization on application of a force and attainment of a predefined deflection or covering of a predefined range of movement, the criterion employed is that which is fulfilled first.

10. Method according to any one of Claims 1 to 9, **characterized in that** in measure a) the actuating element (10) is brought into a position which corresponds to an assumed location of the actuating position.

11. Method according to any one of Claims 1 to 10, **characterized in that** the biasing arrangement (14) comprises a detent arrangement (18, 20).

12. Method according to any one of Claims 1 to 11, **characterized in that** measures a) - d) are performed in succession in order to determine multiple actuating positions (P, R, N, D).

13. Method of determining an actuating position in a transmission actuation system comprising an actuating element (10) which can be brought into a plurality of actuating positions (P, R, N, D) by an actuator arrangement, the actuating element (10) having an associated biasing arrangement (14) for at least one of the actuating positions (P, R, N, D), which when the actuating element (10) occupies a position in a biasing range around the actuating position (P, R, N, D) biases the actuating element (10) towards an actuating position, the method comprising the following measures:
a₁) alternate stressing of the actuating element (10) in opposing directions with respective actuating forces for reciprocating movement of the actuating element (10) between two limit positions,
b₁) reduction of the actuating forces and/or deflection of the actuating element whilst performing measure a₁), so that the interval between the limit positions on reversal of the movement increases,
c₁) when the actuating element (10) no longer performs a reciprocating movement when acted upon by a force, determination of the position assumed by the actuating element (10) in this state as the actuating position, or when the reciprocating movement of the actuating element (10) is confined to a predefined range of movement, determination of a position of the actuating element (10) in the range of movement as the actuating position,
**characterized in that** a position registering arrangement (12) is associated with the actuating element (10) for registering the position of the actuating element (10) in the form of an actual angle value.

## Revendications

1. Procédé pour déterminer une position de commande sur un système de commande de mécanisme, lequel système de commande de mécanisme comprend un élément de commande pouvant être amené par un dispositif actionneur dans une pluralité de positions de commande (P, R, N, D), un dispositif de précontrainte (14) étant attribué à l'élément de commande (10) pour au moins l'une des positions de commande (P, R, N, D), lequel dispositif précontraint l'élément de commande (10) en direction de la position de commande (P, R, N, D) dans le cas où l'élément de commande (10) présente une position située dans une zone de précontrainte autour de la position de commande (P, R, N, D), lequel procédé présente les mesures suivantes :
a) déplacement de l'élément de positionnement (10) dans une position initiale dans ou à proximité de la zone de précontrainte,
b) sollicitation alternative de l'élément de commande (10) dans des directions opposées avec des forces de commande respectives pour le va-et-vient de l'élément de commande (10) dans la zone de précontrainte,
c) pendant l'application de la mesure b) réduction des forces de commande et/ou d'une déviation de l'élément de commande (10),
d) dans le cas où l'élément de commande (10) ne se déplace plus d'un côté et de l'autre avec la sollicitation de force présente, détermination de la position occupée dans cet état de l'élément de commande (10) en tant que position de commande, ou lorsque le mouvement de va-et-vient de l'élément de commande (10) est limité à une zone de déplacement prédéfinie, détermination d'une position de l'élément de commande (10) dans la zone de déplacement en tant que position de commande,
**caractérisé en ce que**
un dispositif d'enregistrement de position (12) est attribué à l'élément de commande (10) pour l'enregistrement de la position de l'élément de commande (10) sous la forme d'une valeur réelle d'angle.

2. Procédé selon la revendication 1,
**caractérisé en ce que**, au début de la mesure b), l'élément de commande (10) est sollicité de telle sorte qu'il ne peut pas être déplacé à partir de la zone de précontrainte.

3. Procédé selon la revendication 1 ou 2,
**caractérisé en ce que**, pendant une période du mouvement de va-et-vient de l'élément de commande (10), les forces de commande agissant sur cet élément dans des directions opposées sont sensiblement identiques.

4. Procédé selon l'une quelconque des revendications 1 à 3,
**caractérisé en ce que** la mesure c) comprend la réduction des forces de commande agissant sur l'élément de commande (10) et/ou de la déviation à chaque fois après une période du mouvement de va-et-vient de l'élément de commande (10).

5. Procédé selon l'une quelconque des revendications 1 à 4,
**caractérisé en ce que** la mesure c) comprend la réduction des forces de commande agissant sur l'élément de commande (10) et/ou de la déviation dans des étapes prédéfinies.

6. Procédé selon la revendication 5,
**caractérisé en ce que** la grandeur d'incrément est modifiable.

7. Procédé selon l'une quelconque des revendications 1 à 6,
**caractérisé en ce que**, lors de la mesure b), après la sollicitation de l'élément de commande (10) avec une force de commande dans l'une des directions opposées, cet élément est sollicité alors avec une force de commande dans l'autre des directions opposées lorsque, en cas de sollicitation dans l'une des directions opposées, pratiquement aucun autre déplacement de l'élément de commande (10) n'est généré.

8. Procédé selon l'une quelconque des revendications 1 à 7,
**caractérisé en ce que**, lors de la mesure b), après la sollicitation de l'élément de commande (10) avec une force de commande dans l'une des directions opposées, cet élément est sollicité alors avec une force de commande dans l'autre des directions opposées lorsque, en cas de sollicitation dans l'une des directions opposées, une zone de déplacement prédéfinie est traversée et/ou une amplitude de déviation prédéfinie est atteinte.

9. Procédé selon la revendication 7 et la revendication 8,
**caractérisé en ce que**, lors de la mesure b), on utilise le critère d'arrêt de mouvement avec sollicitation de force et obtention d'une déviation prédéfinie ou traversée d'une zone de déplacement prédéfinie pour la sollicitation avec une force de commande agissant dans la direction opposée, lequel critère est satisfait en premier.

10. Procédé selon l'une quelconque des revendications 1 à 9,
**caractérisé en ce que**, lors de la mesure a), l'élément de commande (10) est amené dans une position qui correspond à une position admise de la position de commande.

11. Procédé selon l'une quelconque des revendications 1 à 10,
**caractérisé en ce que** le dispositif de précontrainte (14) comprend un dispositif d'encliquetage (18, 20).

12. Procédé selon l'une quelconque des revendications 1 à 11,
**caractérisé en ce que** les mesures a) - d) sont appliquées les unes après les autres pour déterminer plusieurs positions de commande (P, R, N, D).

13. Procédé pour déterminer une position de commande sur un système de commande de mécanisme, lequel système de commande de mécanisme comprend un élément de commande (10) pouvant être amené par un dispositif actionneur dans une pluralité de positions de commande (P, R, N, D), un dispositif de précontrainte (14) étant attribué à l'élément de commande (10) pour au moins l'une des positions de commande (P, R, N, D), lequel dispositif précontraint l'élément de commande (10) en direction de la position de commande dans le cas où l'élément de commande (10) présente une position disposée dans une zone de précontrainte autour de la position de commande (P, R, N, D), lequel procédé présente les mesures suivantes :
a₁) sollicitation alternative de l'élément de commande (10) dans des directions opposées avec des forces de commande respectives pour le va-et-vient de l'élément de commande (10) entre deux positions finales de déplacement,
b₁) pendant l'application de la mesure a₁) réduction des forces de commande et/ou d'une déviation de l'élément de positionnement de sorte que la distance aux positions finales de déplacement augmente en cas d'inversion de mouvement,
c₁) dans les cas où l'élément de commande (10) ne se déplace plus d'un côté ou de l'autre avec la sollicitation de force présente, détermination de la position occupée dans cet état de l'élément de commande (10) en tant que position de commande, ou lorsque le mouvement de va-et-vient de l'élément de commande (10) est limité à une zone de déplacement prédéfinie, détermination d'une position de l'élément de commande (10) dans la zone de déplacement en tant que position de commande,
**caractérisé en ce que**
un dispositif d'enregistrement de position (12) est attribué à l'élément de commande (10) pour l'enregistrement de la position de l'élément de commande (10) sous la forme d'une valeur réelle d'angle.
